# EUROPEAN PATENT APPLICATION

(11) **EP 1 244 029 A1**
(43) Date of publication of application: **25.09.2002**
(21) Application number: 01302486.4
(22) Date of filing: 19.03.2001
(51) Int. Cl.: G06F 17/30

(54) **Method of connecting the internet by scanning identifying codes**

(71) Applicant: Yung-Nan, Hsu, Fong Yuan, Taichung (TW)
(72) Inventor: Yung-Nan, Hsu, Fong Yuan, Taichung (TW)
(74) Representative: Nicholls, Michael John

(57) **Abstract**

The invention is directed to a method of connecting the Internet by scanning identifying codes. The invention comprises: scanning an identifying code printed on an article to generate an output signal; and connecting a terminal to a web site corresponding to the identifying code or sending an E-mail to an E-mail address corresponding to the identifying code from a terminal, according to the output signal. A method of connecting the Internet by scanning identifying codes according to the invention has the following advantages: (1) It takes less steps to connect required web sites; (2) It saves much more time to connect required web sites; (3) The problem that easy-to-remember web sites causing high prices can be resolved; (4) Any companies or persons can print required identifying codes on products, name cards or any other articles to allow other persons to be able to easily contact them; and (5) All people can connect required web sites without learning.

## Description

### Field of the invention

The invention relates to a method of connecting the Internet, and more particularly to a method of connecting the Internet by scanning identifying codes.

### Description of the Related Art

A network is of an operational environment for connecting different computers to each other to share resources stored in the computers and to exchange data with each other. In general, the network can be classified into Local Area Networks (LANs) and Wide Area Networks (WANs). Computers in Local Area Networks communicate with each other through network cables. Due to the limitations on the distances of the network cables, each Local Area Network can only be built within a building or local area. Computers in Wide Area Networks communicate with each other through public phone networks or direct cables. Since there are no limitations on the distances of the public phone networks or direct cables, that is why Wide Area Networks are named. By connecting various Local Area Networks and Wide Area Networks to each other among countries, a global network, called Internet, is built.

Any one resource in the Internet is assigned with a unique address which is called "Uniform Resource Locator (URL)". Which server a file is stored in, what the name of the file is, which directory of the server the filed is stored in, etc. can be known by a unique Uniform Resource Locator assigned thereto. Like the license plate of a car, the background of the car, for example, the owner of the car, can be known through the license plate. Similarly, the background of a file in a network can be retrieved through a unique Uniform Resource Locator assigned thereto. It is more appropriate to consider that like door plates, Uniform Resource Locators are used for indicating the addresses of corresponding web sites.

Typically, a method for connecting the Internet can be achieved by inputting Uniform Resource Locators through a keyboard. Most browsers have a field named URL, Location, Address or Netsite at which users are allowed to input addresses. Currently, graphical browsers, such as Navigator of Netscape Corporation, are more popular. Alternatively, a method for connecting the Internet can be fulfilled by clicking on "Open Location" in the "File" of a menu bar to show a small window and then, inputting a required address therein and pressing a button "Open."

Furthermore, a method for connecting required web sites can be fulfilled by inputting keywords using search engines, such as Kimo, Yam or Yaho. For example, a web site, Science and Technology Law Center of Institute for Information Industry, can be located by inputting keywords "Institute for Information Industry." Also, required information can be located by clicking on topics, such as weathers and stock market, using a mouse.

However, a conventional method for connecting the Internet has the following disadvantages:
(1) Since more steps for changing web pages and learning are needed, it takes time.
(2) It is necessary to take time to consider and select appropriate keywords, and this way does not guarantee that required web sites can be located.
(3) Also, it takes time to consider which search engines should be selected, because the same keywords inputted will cause different results for different search engines.
(4) If all search engines are used to locate required web sites, it will take much more time.
(5) It takes time to input the addresses of required web sites, and this way will cause different extents of inconveniences to persons who do not know English or are handicapped.
(6) It is uneasy to keep the address of required web sites in mind for connecting the Internet unless the addresses are before hand added into "My Favorites." In fact, many items added into "My Favorites" will cause inconvenient to users to select.

### SUMMARY OF THE INVENTION

In view of the above, the present invention provides a method of connecting the Internet by scanning identifying codes which allows people to rapidly and easily connect the Internet without further learning. The method comprises the steps of scanning an identifying code printed on an article to generate an output signal; and connecting a terminal to a web site corresponding to the identifying code according to the output signal.

The present invention further provides another method of connecting the Internet by scanning identifying codes. The method comprises the steps of scanning an identifying code printed on an article to generate an output signal; and sending an E-mail to an E-mail address corresponding to the identifying code from a terminal according to the output signal.

### BRIEF DESCRIPTION OF THE DRAWINGS

Fig. 1 is a flow chart showing a method of connecting the Internet by scanning identifying codes according to a first embodiment of the present invention; and
Fig. 2 is a flow chart showing a method of connecting the Internet by scanning identifying codes according to a second embodiment of the present invention.

### DETAILED DESCRIPTION OF THE PREFERRED EMBODIMENTS

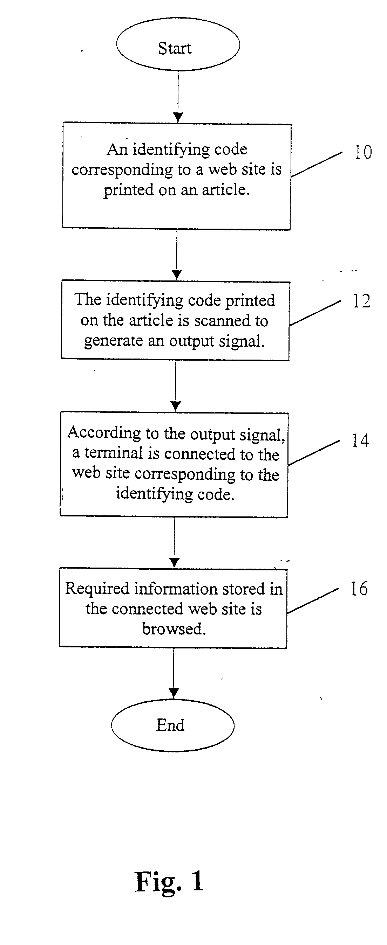

Referring to Fig. 1, a method of connecting the Internet by scanning identifying codes according to a first embodiment of the present invention is shown. First, in step 10, an identifying code, such as a bar code, is printed on an article, such as a name card. The identifying code is corresponding to a web site of a person or company for example. In step 12, a scanner, such as a laser gun is used to scan the identifying code of the article to generate an output signal. Then, in step 14, a terminal, such as a personal computer is connected to the web site corresponding to the identifying code according to the output signal. Next, in step 16, required information stored in the web site is browsed.

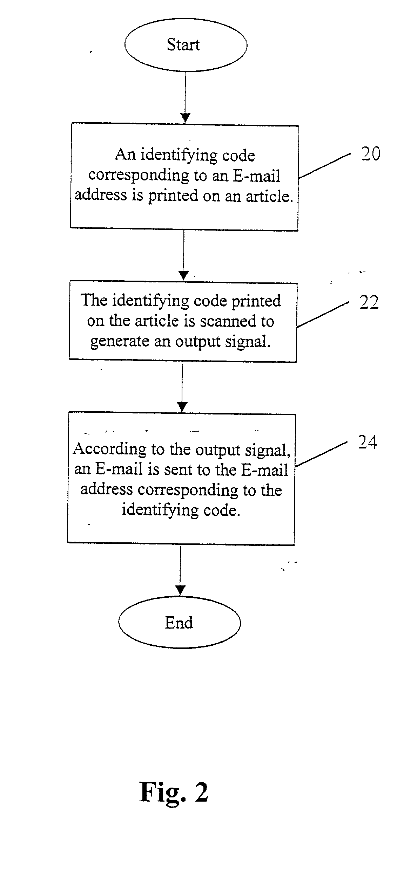

Referring now to Fig. 2, a method of connecting the Internet by scanning identifying codes according to a second embodiment of the present invention is shown. First, in step 20, an identifying code, such as a bar code, is printed on an article, such as a name card. The identifying code is corresponding to an E-mail address of a person or company, for example. Then, in step 22, a scanner, such as a laser gun, is used to scan the identifying code of the article to generate an output signal. Next, in step 24, a terminal, such as a personal computer, sends an E-mail to the E-mail address corresponding to the identifying code according to the output signal.

As compared to a conditional method of connecting the Internet, the method of connecting the Internet by scanning identifying codes according to the present invention has the following advantages:
(1) It takes less steps to connect required web sites.
(2) It saves much more time to connect required web sites.
(3) The problem that easy-to-remember web sites causing high prices can be resolved.
(4) Any companies or persons can print required identifying codes on products, name cards or any other articles to allow other persons to be able to easily contact them.
(5) All people can connect required web sites without learning.

It will be appreciated that aspects of the invention may be embodied by a computer program running on a computer system. Such a program may be stored on a computer readable storage medium, and the invention extends to such a medium.

## Claims

1. A method of connecting the Internet by scanning identifying codes, comprising the steps of:
printing an identifying code corresponding to the address of an web site, on an article;
scanning the identifying code of the article to generate an output signal; connecting a terminal to the web site corresponding to the identifying code according to the output signal; and
browsing required information stored in the connected web site.

2. A method of connecting the Internet by scanning identifying codes, comprising the steps of:
scanning an identifying code printed on an article to generate an output signal;
connecting a terminal to a web site corresponding to the identifying code according to the output signal; and
browsing required information stored in the connected web site.

3. A method of connecting the Internet by scanning identifying codes, comprising the steps of:
printing an identifying code corresponding to an E-mail address, on an article; scanning the identifying code of the article to generate an output signal; and
sending an E-mail to the E-mail address corresponding to the identifying code from a terminal according to the output signal.

4. A method of connecting the Internet by scanning identifying codes, comprising the steps of:
scanning an identifying code printed on an article to generate an output signal; and
sending an E-mail to an E-mail address corresponding to the identifying code from a terminal according to the output signal.

5. The method as claimed in claim 1, 2, 3 or 4, wherein the identifying code is a bar code.

6. The method as claimed in claim 1, 2, 3, 4 or 5, wherein the article is a name card.

7. The method as claimed in any one of claims 1 to 6, wherein the terminal is a personal computer.

8. A method as claimed in any one of claims 1 to 7, wherein the step of scanning an identifying code to generate an output signal is performed by a laser gun.

9. A computer program comprising program code means for executing on a programmed computer the method of any one of the preceding claims.
